Europäisches Patentamt

(19) European Patent Office

Office européen des brevets

(11) Veröffentlichungsnummer: **0 090 885**
**B1**

(12) **EUROPÄISCHE PATENTSCHRIFT**

(45) Veröffentlichungstag der Patentschrift:
08.01.86

(51) Int. Cl.⁴: **F 15 B 15/10**, B 23 Q 3/08

(21) Anmeldenummer: **82109716.9**

(22) Anmeldetag: **21.10.82**

(54) **Druckmittelbetriebener Stellantrieb.**

(30) Priorität: **05.05.82 DE 3216753**
**01.04.82 DE 3212155**

(43) Veröffentlichungstag der Anmeldung:
**12.10.83 Patentblatt 83/41**

(45) Bekanntmachung des Hinweises auf die Patenterteilung:
**08.01.86 Patentblatt 86/2**

(84) Benannte Vertragsstaaten:
**AT BE CH DE FR GB IT LI NL SE**

(56) Entgegenhaltungen:
**FR - A - 2 105 632**
**FR - A - 2 214 055**
**FR - A - 2 278 968**
**FR - A - 2 448 060**
**GB - A - 1 604 686**
**US - A - 3 025 072**
**US - A - 3 663 027**

(73) Patentinhaber: **DE-STA-CO Metallerzeugnisse GmbH,**
**Neue Mainzer Strasse 14-16,**
**D-6000 Frankfurt/Main 1 (DE)**

(72) Erfinder: **Emmert, Manfred, Am Kapfrain 8,**
**D-7859 Efringen-Kirchen (DE)**

(74) Vertreter: **Charrier, Rolf, Dipl.-Ing.,**
**Postfach 260 Rehlingenstrasse 8,**
**D-8900 Augsburg 31 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung betrifft einen druckmittelbetriebenen Stellantrieb, insbesondere Spannzylinder, mit einer elastischen, einen Arbeitsraum umschliessenden zylindrischen Dichtmanschette, welche zwischen einem Zylindergehäuse und einem Stellglied angeordnet ist und deren offene Enden gegen einander gegenüberliegende planparallele Flächen des Zylindergehäuses anliegen, wobei zur Ausführung eines Arbeitshubs über eine Bohrung in einer der planparallelen Flächen dem Arbeitsraum ein Druckmedium zugeführt wird.

Ein solcher Stellantrieb ist der FR-A Nr. 2214055 entnehmbar. Die Dichtmanschette weist an ihren offenen Enden die gleiche Wandstärke auf wie in ihrem übrigen Bereich. Die planparallelen Flächen des Zylindergehäuses üben einen Axialdruck auf die Dichtmanschette aus, damit zwischen den offenen Enden der Dichtmanschette und den planparallelen Flächen ein Anpressdruck herrscht, der die Abdichtung des Arbeitsraumes bewirken soll. Zu diesem Zweck wird eine der planparallelen Flächen durch einen in das Zylindergehäuse einschraubbaren Gewindeeinsatz gebildet. Die Dichtmanschette liegt gegen ein im Querschnitt kreisförmiges Widerlager des Stellglieds an und wird im Querschnitt gesehen dort W-förmig deformiert.

Das Druckmedium wird dem Arbeitsraum explosionsartig zugeführt. Hierbei wird derjenige Teil des Mantels der elastischen Dichtmanschette, der unabgestützt zwischen dem Zylindergehäuse und dem Widerlager verläuft, aufgebeult und gleichzeitig in diesem Bereich die Ränder der offenen Enden der Dichtmanschette aufgewölbt, so dass das explosionsartig zugeführte Druckmedium aus dem Arbeitsraum entweichen kann. Die Dichtmanschette wird dabei so deformiert, dass sie nur für einen einmaligen Gebrauch verwendet werden kann und für den nächsten Arbeitshub durch eine neue Manschette ersetzt werden muss.

Es besteht die Aufgabe, diesen Stellantrieb so zu verbessern, dass eine einwandfreie Abdichtung zwischen Dichtmanschette und Gehäuse auch über eine lange Betriebsdauer hinweg gewährleistet ist.

Gelöst wird diese Aufgabe durch die kennzeichnenden Merkmale des Anspruches 1. Vorteilhafte Ausgestaltungen sind den weiteren Ansprüchen entnehmbar.

Ausführungsbeispiele werden nachfolgend anhand der Zeichnungen näher erläutert. Es zeigen:

Fig. 1 einen Längsschnitt durch die linke Hälfte bei einer ersten Ausführungsform;

Fig. 2 einen Längsschnitt durch den rechten Teil bei einer weiteren Ausführungsform;

Fig. 3 einen Querschnitt längs der Linie III-III in Fig. 2;

Fig. 4 einen Längsschnitt durch einen Spannzylinder im nichtbeaufschlagten Zustand;

Fig. 5 einen Längsschnitt durch den linken Teil des Zylinders nach Fig. 4 in beaufschlagtem Zustand;

Fig. 6 einen Querschnitt längs der Linie VI-VI in Fig. 4;

Fig. 7 einen Längsschnitt durch einen Arbeitszylinder mit zwei Kniehebelmechanismen;

Fig. 8 einen Querschnitt längs der Linie VIII-VIII in Fig. 7;

Fig. 9 einen Längsschnitt durch einen Arbeitszylinder mit einem Federmechanismus, und

Fig. 10 einen Querschnitt längs der Linie X-X in Fig. 9.

Der im Querschnitt rechteckige Kolben 2 ist angeordnet in einem topfförmigen Zylinder 1, der ebenfalls rechteckigen Querschnitt aufweist.

Das Gehäuse 1 des Zylinders besteht aus einer Unterseite 8, von welcher rechtwinklig zwei Wandungen 9, 10 abgehen. Deren zueinander zeigende Flächen 11, 12 sind plan und verlaufen parallel zueinander. Zwischen diesen Flächen 11, 12 ist auch der Kolben 2 geführt. Rechtwinklig zu den Wandungen 9, 10 und rechtwinklig zur Unterseite 8 weist das Gehäuse 1 des Zylinders zwei weitere Wandungen 13, 14 auf, zwischen denen der Kolben 2 mit Spiel angeordnet ist.

Der Kolben 2 ist an seiner Unterseite mit einer länglichen, in Längsrichtung U-förmigen Ausnehmung 15 versehen, welche zur Unterseite 8 des Zylinders 1 hin offen ist. In dieser Ausnehmung 15 ist eine elastische O-förmige Manschette 3 angeordnet, welche unten gegen die Unterseite 8 des Zylinders 1 anliegt. Diese Manschette 3 weist Dichtlippen 16 auf, welche in das Innere 7 der Manschette 3 gerichtet sind und welche gegen die Flächen 11, 12 anliegen. Die Wandung 9 ist mit einer Anschlussbohrung 17 versehen, welche mit dem Inneren der Manschette 3 kommuniziert.

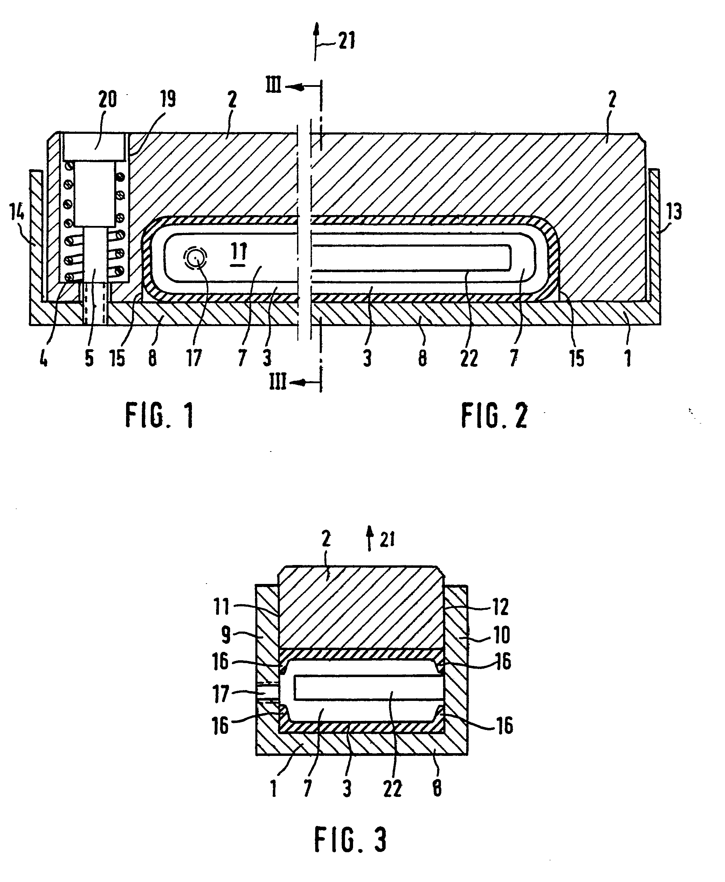

Bei dem Ausführungsbeispiel nach Fig. 1 handelt es sich um eine zylindrische, im nicht eingebauten Zustand runde, O-förmige Manschette.

An beiden Enden von Kolben 2 und Zylinder 1 können Rückholfedern vorgesehen sein. Eine derartige Ausbildung ist linksseitig in Fig. 1 gezeigt. Hierbei ist ein Schraubbolzen 5 mit der Unterseite 8 des Zylinders 1 verschraubt. In einer abgestuften Bohrung 19 des Kolbens 2 ist zwischen dem Grund dieser Bohrung 19 und dem Kopf 20 des Schraubbolzens 5 eine Rückholfeder 4 angeordnet, welche den Kolben 2 in Richtung der Unterseite 8 des Zylinders 1 presst. Der Schraubbolzen 5 ist hierbei einstellbar mit der Unterseite 8 verschraubt, womit der Hub des Kolbens 2 einstellbar begrenzbar ist.

Wird über die Bohrung 17 ein Druckmedium in den Arbeitsraum 7 der durch die Wandungen 9, 10 begrenzten Manschette 3 gepresst, dann führt der Kolben 2 eine Hubbewegung in Pfeilrichtung 21 aus. Wird das Innere 7 der Manschette 3 entlüftet, dann wird der Kolben 2 durch die Feder 4 in seine dargestellte Ursprungslage zurückgeführt.

Zwischen den beiden Flächen 11, 12 kann nach Fig. 2 und 3 ein das Innere 7, d. h. den Arbeitsraum der Manschette 3 teilweise ausfüllender Block 22 angeordnet sein. Durch diesen Block 22 wird das Totvolumen innerhalb der Manschette 3 verringert und damit entsprechend das Volumen des Druckmediums verringert, welches in das Innere der Manschette 3 eingebracht werden muss, bis die Hubbewegung beginnt.

Die Vorrichtung zeichnet sich aus durch eine Rechteckbauweise, bei welcher die Baugrösse dem jeweiligen Einsatzzweck anpassbar ist. Der Kolben 2 übt eine Flächenpressung aus, wobei die vom Kolben 2 ausgeübte Kraft grösser ist gegenüber der Kraft bei einem Rundzylinder gleicher Baubreite. Die Bauhöhe der Vorrichtung ist hierbei relativ gering. Da der Kolben 2 gegenüber den Wandungen 13, 14 ein Spiel aufweist, kann sich der Kolben 2 einer leichten Schräglage des Teils anpassen, auf den er wirkt. Die Vorrichtung zeichnet sich durch die Verwendung von wenig Einzelteilen aus, wobei lediglich die Flächen 11, 12 einer Feinbearbeitung unterworfen werden müssen.

Die Vorrichtung ist für die vielfältigsten Verwendungszwecke einsetzbar, wie beispielsweise zum Heben, Spannen, Pressen, Drücken, Prägen, Schneiden und Stanzen, also insbesondere dort, wo bei kleinem Hub der Kolben 2 hohe Kräfte ausüben soll.

Das Prinzip der Verwendung einer Manschette 3 besteht darin, dass bei einer Druckbeaufschlagung des Inneren 7 der Manschette 3 diese bestrebt ist, eine kreisrunde Form einzunehmen, wodurch der Kolben 2 in Pfeilrichtung 21 bewegt wird. Beim vorbeschriebenen Ausführungsbeispiel übt der Kolben 2 eine Kraft aus, wenn im Inneren 7 der Manschette 3 ein Druck herrscht.

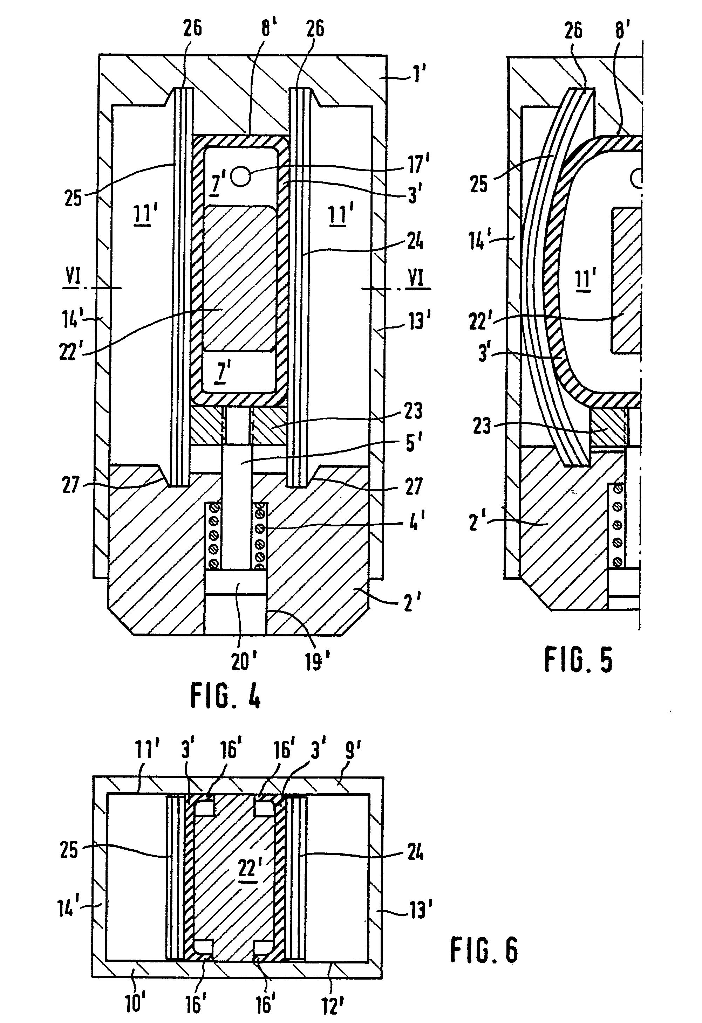

Die Fig. 4 bis 6 zeigen einen Zylinder, der in erster Linie als Spannzylinder geeignet ist. Bei ihm übt im Gegensatz zum Beispiel nach den Fig. 1 bis 3 der Kolben 2' eine Kraft aus, wenn dass Innere 7 der Manschette 3 vom Druckmedium nicht beaufschlagt ist.

In den Fig. 4 bis 6 sind diejenigen Teile, welche gleich oder äquivalent sind zu denjenigen nach den Fig. 1 bis 3 mit den gleichen Bezugszahlen, jedoch mit einem Apostroph versehen.

Der im Querschnitt wiederum rechteckige Zylinder 1' weist eine Seite 8' und die Wandungen 9', 10', 13' und 14' auf. Der Kolben 2' ist zwischen diesen Wandungen geführt. Zwischen den Flächen 11' und 12' der Wandungen 9' und 10' ist die Manschette 3' angeordnet. An der der Seite 8' gegenüberliegenden Seite liegt die Manschette 3' gegen einen gehäusefesten Anschlag 23 an. In diesen mit dem Gehäuse 1' fest verbundenen Anschlag 23 ist ein Schraubbolzen 5' eingeschraubt. Zwischen dem Grund der Bohrung 19' und dem Kopf 20' des Schraubbolzens 5' ist eine Rückholfeder 4' angeordnet. Zwischen Nuten 26 an der Seite 8' und Nuten 27 an der Innenseite des Kolbens 2' sind zwei Federpakete 24, 25 angeordnet. Diese Federpakete 24, 25 bestehen aus federelastischen Flachfedern, beispielsweise aus gewalztem Stahlbandmaterial. Im Ruhezustand handelt es sich um gerade Federn, wie in Fig. 4 gezeigt. Im Ruhezustand liegen diese Federpakete 24, 25 gegen die Manschette 3' und gegen den Anschlag 23 an.

In der Stellung nach Fig. 4 halten diese Federpakete 24, 25 den Kolben 2' in der gezeigten Lage.

Dieser ist daher aus dem Zylinder 1' nach aussen bewegt und befindet sich in Spannstellung, wenn die Vorrichtung als Spannzylinder eingesetzt ist.

Soll der Kolben 2' in das Innere des Zylinders 1' bewegt werden, dann wird dem Inneren 7' der Manschette 3' ein Druckmedium zugeführt, wodurch die Manschette 3' mit ihren Aussenseiten die Federpakete 24, 25 nach aussen drückt, wie dies die Fig. 5 zeigt. Durch die Rückholfeder 4' wird dabei der Kolben 2' in das Innere des Zylinders 1' bewegt.

Bei der in Fig. 4 gezeigten Stellung ist der Kolben 2' geeignet, gegen irgendwelche Gegenstände zu pressen und diese dadurch festzuspannen. Sollen die vom Kolben 2' gespannten Gegenstände gelöst werden, dann wird in das Innere 7' der Manschette 3' ein Druckmedium geleitet, wodurch der Kolben 2' den gehaltenen Gegenstand freigibt (Fig. 5).

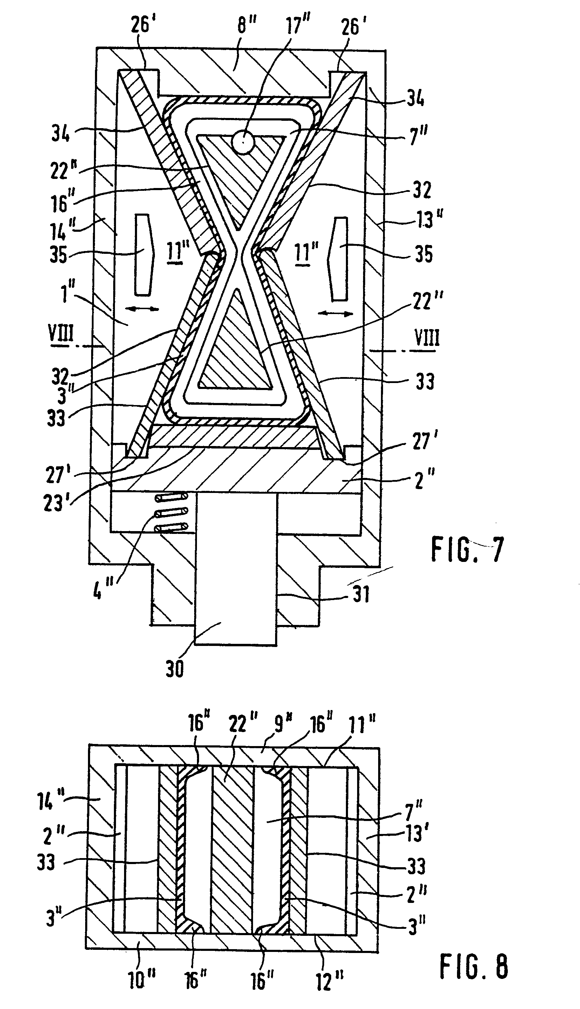

Bei dem Ausführungsbeispiel nach den Fig. 7 bis 10 sind die Bezugszahlen derjenigen Teile, die gleich oder äquivalent zu denjenigen der Fig. 1 bis 3 sind, mit einem Doppelapostroph versehen, während diejenigen, die mit denen nach Fig. 4 bis 6 vergleichbar sind, mit einen Apostroph versehen sind.

Bei der Ausführungsform nach Fig. 7 und 8 ist im Inneren des im Querschnitt rechteckigen Zylinders 1'' ein Kolben 2'' hin- und herbeweglich angeordnet. Dieser Kolben 2'', dessen Querschnitt ebenfalls rechteckig ist, weist eine Kolbenstange 30 auf, welche in einer Bohrung 31 an einem Ende des Zylinders 1'' geführt ist. Zwischen diesem Ende des Zylinders 1'' und dem Kolben 2'' ist eine Druckfeder 4'' angeordnet.

Zwischen dem Kolben 2'' und der Seite 8'' des Zylinders 1'' sind zwei Kniehebelmechanismen 32 vorgesehen. Diese beiden Kniehebelmechanismen 32 stützen sich einerseits gegen Nuten 27' am Kolben 2'', anderseits in Nuten 26' an der Seite 8'' ab. Die beiden Kniehebelgelenkmechanismen 32 bestehen jeweils aus einem ersten Hebel 33 und einem zweiten Hebel 34, wobei das Kniegelenk gebildet wird durch einen keilförmigen Einschnitt am Hebel 33, in den eine Verrundung am Hebel 34 eingreift.

Zwischen den beiden Gelenkmechanismen 32, der Unterseite 8'' und dem zylinderfesten Anschlag 23' ist die Manschette 3'' angeordnet. Diese elastische und im Ruhezustand ringförmige Manschette 3'' weist innenseitig an ihren Rändern Dichtlippen 16'' auf, welche gegen die zueinander parallel verlaufenden Wandungen 11'', 12'' des Zylinders 1'' anliegen. Die ursprünglich runde Manschette 3'' liegt gegen die Gelenkmechanismen 32 an, die im Ruhezustand gegen die Manschette 3'' geknickt sind.

Bei vom Druckmedium nicht beaufschlagtem Inneren 7'' der Manschette 3'' hält die Feder 4'' den Kolben 2'', die Hebelmechanismen 32 und damit die Manschette 3'' in der in Fig. 7 dargestellten Lage.

Wird das Innere 7'' der Manschette 3'' mit dem Druckmedium über den Anschluss 17'' beaufschlagt, dann vergrössert sich hierdurch das innere Volumen der Manschette 3″. Da die Manschette 3″ gegen den Anschlag 23′ und gegen die Unterseite 8″ anliegt, kann die Volumenvergrösserung nur dadurch erfolgen, dass die Bereiche der Manschette 3″, welche gegen die Gelenkmechanismen 32 anliegen, sich seitlich nach aussen bewegen, wobei die Kniegelenkmechanismen 32 in eine gestreckte Form überführt werden. Hierdurch wird der Kolben 2″ mit seiner Kolbenstange 30 nach aussen aus dem Zylinder 1″ bewegt. Wird die Manschette 3″ vom Druckmedium entlastet, dann führt die Feder 4″ den Kolben 2″, die Hebelmechanismen 32 und die Manschette 3″ in die gezeigte Ausgangslage zurück.

Die Hubbewegung kann begrenzt werden durch Anschläge 35 in der Zylinderkammer, wodurch die Streckung der Hebelmechanismen 32 begrenzt wird. Diese Anschläge 35 können einstellbar sein. Sie werden bevorzugt so eingestellt, dass eine völlige Streckung nicht erreicht wird, damit gewährleistet ist, dass die Feder 4″ die Hebelmechanismen 32 in die gezeigte Ausgangslage zurückführt.

Eine möglicherweise in bezug auf ein spezielles Spannproblem gewünschte Totpunkt- oder Übertotpunktstellung soll damit jedoch nicht ausgeschlossen sein. Dabei kann die Entriegelung der Übertotpunktstellung über mechanische Mittel von aussen oder durch die Beaufschlagung der Kniehebelteile mit einem Druckmedium von der Aussenseite oder ähnlichem erfolgen.

Die aus einem elastischen Kunststoffmaterial bestehende Manschette kann einen Mantel aus Federblech aufweisen.

Der zylinderkammerseitige Anschlag 23′ ist nicht unbedingt erforderlich. Die Manschette 3″ kann dort gegen den Kolben 2″ anliegen.

Bei Beaufschlagung des Arbeitsraums 7″ der Manschette 3″ übt die Kolbenstange 30 einen relativ geringen Hub aus. Die Kolbenkraft ist jedoch 10 bis 15 mal grösser im Vergleich zu einem Zylinder gleicher Baugrösse, bei welchem die Innenseite des Kolbens 2″ direkt mit dem Druckmedium beaufschlagt wird. Erreicht wird dies durch die im Inneren des Zylinders 1″ angeordneten Kniegelenkhebelmechanismen 32.

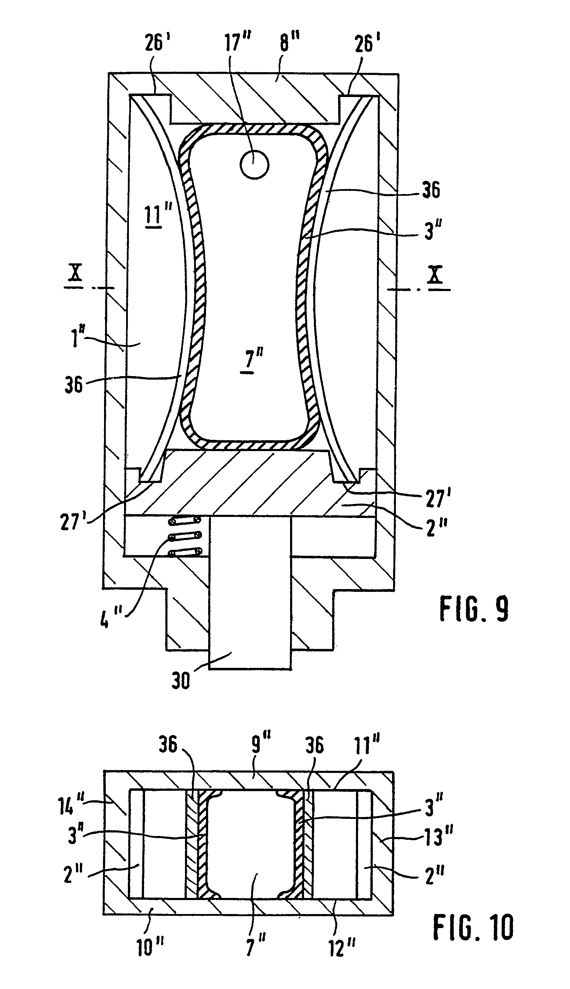

Die in Fig. 9 und 10 gezeigte Ausführungsvariante unterscheidet sich von der zuvor beschriebenen Ausführungsvariante in erster Linie dadurch, dass anstelle der Kniegelenkmechanismen 32 zwei bogenförmig gekrümmte Federn 36 verwendet werden. Bei einer Druckbeaufschlagung des Arbeitsraums 7″ der Manschette 3″ wird die Manschette 3″ in eine gestreckte Form überführt, wobei der Kolben 2″ mit seiner Kolbenstange 30 bei hoher Kraft einen relativ geringen Hub ausführt. Bei diesem Ausführungsbeispiel steht die Manschette 3″ in Kontakt mit dem Kolben 2″. In seiner einfachsten Ausführungsform kann der Zylinder nur einen Hebelmechanismus 32 bzw. 36 aufweisen, beispielsweise den rechten Hebelmechanismus 32 in Fig. 7.

In bezug auf die Ausführungsformen nach den Fig. 4 bis 10 sind auch Ausführungsformen denkbar, bei denen der Kolben 2 relativ zum Zylinder 1 eine Schwenkbewegung und keine Axialbewegung ausführt. Zu diesem Zweck wäre der Kolben 2 nicht zwischen den Wandungen 13, 14 zu führen, sondern z. B. über ein Scharnier mit einer dieser Wandungen z. B. der Wandung 14 gelenkig zu verbinden. Zwischen der Manschette 3 und der gegenüberliegenden Wandung 13 wäre zwischen der Unterseite 8 des Zylinders 1 und dem Kolben 2 entweder ein Federpaket 24 oder eine Flachfeder 36 oder ein Kniehebelmechanismus 32 anzuordnen. Die Mantelfläche der Manschette 3 wird damit umschlossen durch die Wandung 14, die Unterseite 8, die Federn bzw. den Kniehebelmechanismus und den Kolben 2. Bei Druckbeaufschlagung der Manschette 3 führt dann der Kolben 2 infolge der Deformation der Federn 24 bzw. 36 bzw. der Streckung des Kniehebelmechanismus 32 eine Schwenkbewegung um das Scharnier aus.

**Patentansprüche**

1. Druckmittelbetriebener Stellantrieb, insbesondere Spannzylinder, mit einer elastischen, einen Arbeitsraum (7) umschliessenden zylindrischen Dichtmanschette (3), welche zwischen einem Zylindergehäuse (1) und einem Stellglied (2, 24, 25, 32, 36) angeordnet ist und deren offene Enden gegen einander gegenüberliegende planparallele Flächen (11, 12) des Zylindergehäuses (1) anliegen, wobei zur Ausführung eines Arbeitshubs über eine Bohrung (17) in einer der planparallelen Flächen (11, 12) dem Arbeitsraum (7) ein Druckmedium zugeführt wird, dadurch gekennzeichnet, dass an den offenen Enden der Dichtmanschette (3) in den Arbeitsraum (7) gerichtete und gegen die planparallelen Flächen (11, 12) anliegende Dichtlippen (16) vorgesehen sind und dass die äussere Mantelfläche der Dichtmanschette (3) allseitig von Flächen des Zylindergehäuses (1) und des Stellglieds (2, 24, 25, 32, 36) umgeben ist, die rechtwinklig zu den planparallelen Flächen (11, 12) verlaufen.

2. Druckmittelbetriebener Stellantrieb nach Anspruch 1, dadurch gekennzeichnet, dass die Dichtmanschette (3) von der Unterseite (8) des Zylindergehäuses (1) und den Flächen einer U-förmigen Ausnehmung (15) eines im Zylindergehäuse angeordneten Kolbens (2) umgeben ist.

3. Druckmittelbetriebener Stellantrieb nach Anspruch 2, dadurch gekennzeichnet, dass zwischen Zylindergehäuse (1) und Kolben (2) mindestens eine Rückholfeder (4) vorgesehen ist, welche den Kolben (2) in das Zylindergehäuse (1) bewegt.

4. Druckmittelbetriebener Stellantrieb nach Anspruch 1, dadurch gekennzeichnet, dass zwischen den planparallelen Flächen (11, 12) des Zylindergehäuses (1) ein den Arbeitsraum (7) der Manschette (3) teilweise ausfüllender Block (22) angeordnet ist.

5. Druckmittelbetriebener Stellantrieb nach Anspruch 1 oder 4, dadurch gekennzeichnet, dass zwischen einem im Zylindergehäuse (1) angeordneten Kolben (2) und der dem Kolben (2) gegenüberliegenden Seite (8) des Zylindergehäuses (1) mindestens eine gegen die Manschette (3) anliegende Flachfeder (24, 25, 36) verläuft.

6. Druckmittelbetriebener Stellantrieb nach Anspruch 5, dadurch gekennzeichnet, dass beidseits der Manschette (3) je eine Flachfeder (24, 25, 36) gegen sie anliegend zwischen dem Kolben (2) und der gegenüberliegenden Seite (8) verläuft.

7. Druckmittelbetriebener Stellantrieb nach Anspruch 5 oder 6, dadurch gekennzeichnet, dass am Kolben (2) und an der gegenüberliegenden Seite (8) jeweils Nuten (26, 27) vorgesehen sind, in denen die Federenden angeordnet sind.

8. Druckmittelbetriebener Stellantrieb nach einem der Ansprüche 5 bis 7, dadurch gekennzeichnet, dass die Federn (24, 25) im Ruhezustand, wenn der Arbeitsraum (7) der Manschette (3) vom Druckmedium nicht beaufschlagt ist, geradlinig gestreckt sind.

9. Druckmittelbetriebener Stellantrieb nach einem der Ansprüche 5 bis 7, dadurch gekennzeichnet, dass die Federn (36) im Ruhezustand, wenn der Arbeitsraum (7) der Manschette (3) vom Druckmedium nicht beaufschlagt ist, gegeneinander und gegen die Manschette (3) gekrümmt sind.

10. Druckmittelbetriebener Stellantrieb nach Anspruch 1 oder 4, dadurch gekennzeichnet, dass zwischen einem im Zylindergehäuse (1) angeordneten Kolben (2) und der dem Kolben (2) gegenüberliegenden Seite (8) des Zylindergehäuses (1) mindestens ein Kniehebelmechanismus (32) angeordnet ist, welcher gegen die Manschette (3) anliegt.

11. Druckmittelbetriebener Stellantrieb nach Anspruch 10, dadurch gekennzeichnet, dass beidseits der Manschette (3) je ein gegen sie anliegender Kniehebelmechanismus (32) angeordnet ist, die miteinander angenähert die Form eines X bilden.

12. Druckmittelbetriebener Stellantrieb nach Anspruch 10 oder 11, dadurch gekennzeichnet, dass das Kniegelenk des Kniehebelmechanismus (32) aus einem keilförmigen Einschnitt am einen Kniehebel (34) und einer in den Einschnitt eingreifenden Verbindung am anderen Kniehebel (33) besteht.

13. Druckmittelbetriebener Stellantrieb nach einem der Ansprüche 5 bis 12, dadurch gekennzeichnet, dass im Zylindergehäuse (1) den Flachfedern (24, 25, 36) bzw. jedem Kniehebelmechanismus (32) ein Anschlag (35) zugeordnet ist, der die Auslenkung der Federn (24, 25, 36) bzw. des Kniehebelmechanismus (32) begrenzt.

14. Druckmittelbetriebener Stellantrieb nach Anspruch 13, dadurch gekennzeichnet, dass der Anschlag (35) einstellbar ist.

15. Druckmittelbetriebener Stellantrieb nach einem der Ansprüche 5 bis 11, dadurch gekennzeichnet, dass zwischen der Manschette (3) und dem Kolben (2) ein gehäusefester Anschlag (23) angeordnet ist.

16. Druckmittelbetriebener Stellantrieb nach einem der Ansprüche 1 bis 15, dadurch gekennzeichnet, dass der Kolben (2) an einer Wandung (13 bzw. 14) des Zylindergehäuses (1) angelenkt ist, gegen das freie Ende des Kolbens (2) ein Federpaket (24), eine Flachfeder (36) oder ein Kniehebelmechanismus (32) anliegt und der Kolben (2) bei Druckbeaufschlagung der Manschette (3) eine Schwenkbewegung ausführt.

## Claims

1. Pressure medium operated adjustment actuator, more particularly cocking cylinders, having an elastic cylindrical sealing sleeve (3) enclosing a working space (7), which is disposed between a cylinder housing (1) and an adjustment member (2, 24, 25, 32, 36) and the open ends of which are adjacent to plane parallel surfaces (11, 12) of the cylinder housing (1) opposite one another, a pressure medium being supplied to the working space (7) via a bore (17) in one of the plane parallel surfaces (11, 12) to perform a power stroke, characterised in that at the open ends of the sealing sleeve (3) are disposed packing washers (16) arranged in the working space (7) and adjacent to the plane parallel surfaces (11, 12) and in that the outer shell surface of the sealing sleeve (3) is surrounded on all sides by sufaces of the cylinder housing (1) and the adjustment member (2, 24, 25, 32, 36), which pass at right angles to the plane parallel surfaces (11, 12).

2. Pressure medium operated adjustment actuator according to Claim 1, characterised in that the sealing sleeve (3) is enclosed by the underside (8) of the cylinder housing (1) and the surfaces of the U-shaped recess (15) of a piston (2) disposed in the cylinder housing.

3. Pressure medium operated adjustment actuator according to Claim 2, characterised in that between the cylinder housing (1) and the piston (2) is disposed at least one return spring (4), which moves the piston (2) in the cylinder housing (1).

4. Pressure medium operated adjustment actuator according to Claim 1, characterised in that between the plane parallel surfaces (11, 12) of the cylinder housing (1) is disposed a block (22) partially filling the working space (7) of the sleeve (3).

5. Pressure medium operated adjustment actuator according to Claim 1 or 4, characterised in that between a piston (2) disposed in the cylinder housing (1) and the side (8) of the cylinder housing (1) opposite the piston (2) passes at least one flat spring (24, 25, 36) lying against the sleeve (3).

6. Pressure medium operated adjustment actuator according to Claim 5, characterised in that on both sides of the sleeve (3) one flat spring respectively (24, 25, 36) lying against said sleeve passes between the piston (2) and the opposite side (8).

7. Pressure medium operated adjustment actuator according to Claim 5 or 6, characterised in that at the piston (2) and at the opposite side (8) respectively are provided grooves (26, 27) in which the spring ends are disposed.

8. Pressure medium operated adjustment actuator according to one of Claims 5 to 7, characterised in that the springs (24, 25) are stretched in a straight line in the state of rest when the working space (7) of the sleeve (3) is not acted upon by the pressure medium.

9. Pressure medium operated adjustment actuator according to one of Claims 5 to 7, characterised in that the springs (36) are curved against one another and against the sleeve (3) in the state of rest when the working space (7) of the sleeve (3) is not acted upon by the pressure medium.

10. Pressure medium operated adjustment actuator according to Claim 1 or 4, characterised in that between a piston (2) disposed in the cylinder housing (1) and the side (8) of the cylinder housing (1) opposite the piston (2) is disposed at least one elbow lever mechanism (32) which lies against the sleeve (3).

11. Pressure medium operated adjustment actuator according to Claim 10, characterised in that on both sides of the sleeve (3) respectively is disposed one elbow lever mechanism (32) lying against said sleeve, which together make the approximate shape of an X.

12. Pressure medium operated ajustment actuator according to Claim 10 or 11, characterised in that the elbow joint of the elbow lever mechanism (32) consists of a wedge-shaped slot at one elbow lever (34) and a connection at the other elbow lever (33) engaging in the slot.

13. Pressure medium operated adjustment actuator according to one of Claims 5 to 12, characterised in that in the cylinder housing (1) to the flat springs (24, 25, 36) or to each elbow lever mechanism (32) respectively is assigned a stop (35) which limits the deflection of the springs (24, 25, 36) or of the elbow lever mechanism (32) respectively.

14. Pressure medium operated adjustment actuator according to Claim 13, characterised in that the stop (35) is adjustable.

15. Pressure medium operated adjustment actuator according to one of Claims 5 to 11, characterised in that between the sleeve (3) and the piston (2) is disposed a stop (23) fixed to the housing.

16. Pressure medium operated adjustment actuator according to one of Claims 1 to 15, characterised in that the piston (2) is pivoted on a wall (13 or 14 respectively) of the cylinder housing (1), a set of springs (24), a flat spring (36) or an elbow lever mechanism (32) lies against the free end of the piston (2) and the piston (2) performs a rotating movement when the sleeve (3) is acted upon by pressure.

## Revendications

1. Dispositif de commande de positionnement actionné par un agent sous pression, en particulier cylindre tondeur, avec une manchette d'étanchéité (3) cylindrique, entourant une chambre de travail (7), la manchette étant disposée entre un corps cylindrique (1) et un organe de positionnement (2, 24, 25, 32, 36) et dont les extrémités ouvertes s'appliquent à des surfaces planes et parallèles opposées (11, 12) du corps cylindrique (1), dispositif dans lequel, pour l'exécution d'une course de travail, un agent sous pression est amené à la chambre de travail (7) en passant par une forure (17) pratiquée dans l'une des surfaces planes et parallèles (11, 12), caractérisé en ce qu'aux extrémités ouvertes de la manchette d'étanchéité sont prévues des lèvres d'étanchéité (16) dirigées vers la chambre de travail (7) et s'appliquant contre les surfaces planes et parallèles (11, 12) et en ce que la surface latérale extérieure de la manchette d'étanchéité (3) est entourée de toutes parts par des surfaces du corps cylindrique (1) et de l'organe de positionnement (2, 24, 25, 32, 36), qui s'étendent perpendiculairement aux surfaces planes et parallèles (11, 12).

2. Dispositif de commande de positionnement actionné par un agent sous pression suivant la revendication 1, caractérisé en ce que la manchette d'étanchéité (3) est entourée par le côté inférieur (8) du corps cylindrique (1) et par les surfaces d'un évidement (15) en forme de U d'un piston (2) disposé dans le corps cylindrique.

3. Dispositif de commande de positionnement actionné par un agent sous pression suivant la revendication 2, caractérisé en ce qu'entre le corps cylindrique (1) et le piston (2) est prévu au moins un ressort de rappel (4) qui déplace le piston (2) dans le corps cylindrique (1).

4. Dispositif de commande de positionnement actionné par un agent sous pression suivant la revendication 1, caractérisé en ce qu'entre les surfaces planes et parallèles (11, 12) du corps cylindrique (1) est disposé un bloc (22) remplissant partiellement la chambre de travail (7) de la manchette (3).

5. Dispositif de commande de positionnement actionné par un agent sous pression suivant l'une des revendications 1 ou 4, caractérisé en ce qu'entre un piston (2) disposé dans le corps cylindrique (1) et le côté (8), opposé au piston (2), du corps cylindrique (1) s'étend au moins un ressort plat (24, 25, 36) s'appliquant contre la manchette (3).

6. Dispositif de commande de positionnement actionné par un agent sous pression suivant la revendication 5, caractérisé en ce que, de part et d'autre de la manchette (3), s'étend chaque fois un ressort plat (24, 25, 36) s'appliquant à elle, entre le piston (2) et le côté opposé (8).

7. Dispositif de commande de positionnement actionné par un agent sous pression suivant l'une des revendications 5 ou 6, caractérisé en ce que sur le piston (2) et sur le côté opposé (8) sont prévues chaque fois des rainures (26, 27) dans lesquelles sont placées les extrémités des ressorts.

8. Dispositif de commande de positionnement actionné par un agent sous pression suivant l'une des revendications 5 à 7, caractérisé en ce que les ressorts (24, 25) sont étendus en ligne droite à l'état de repos, lorsque la chambre de travail (7) de la manchette (3) n'est pas sollicitée par l'agent sous pression.

9. Dispositif de commande de positionnement actionné par un agent sous pression suivant l'une des revendications 5 à 7, caractérisé en ce que les ressorts (36) sont courbés l'un par rapport à l'autre et vers la manchette (3), dans l'état de repos, lorsque la chambre de travail (7) de la manchette (3) n'est pas sollicitée par l'agent sous pression.

10. Dispositif de commande de positionnement actionné par un agent sous pression suivant l'une des revendications 1 ou 4, caractérisé en ce qu'entre un piston (2) disposé dans le corps cylindrique (1) et le côté (8), opposé au piston (2), du corps cylindrique (1) est disposé au moins un mécanisme à leviers à genouillère (32) qui s'applique contre la manchette (3).

11. Dispositif de commande de positionnement actionné par un agent sous pression suivant la revendication 10, caractérisé en ce que, de part et d'autre de la manchette (3), est disposé chaque fois un mécanisme à leviers à genouillère (32) s'appliquant à la manchette, ces mécanismes formant l'un avec l'autre à peu près la forme d'un X.

12. Dispositif de commande de positionnement actionné par un agent sous pression suivant l'une des revendications 10 ou 11, caractérisé en ce que la genouillère du mécanisme à leviers à genouillère (32) consiste en une entaille en forme de coin sur un levier à genouillère (34) et en une liaison pénétrant dans cette entaille, sur l'autre levier à genouillère (33).

13. Dispositif de commande de positionnement actionné par un agent sous pression suivant l'une des revendications 5 à 12, caractérisé en ce que dans le corps cylindrique (1), aux ressorts plats (24, 25, 36), respectivement à chaque mécanisme à leviers à genouillère (32) est associée une butée (35) qui limite la déviation des ressorts (24, 25, 36), respectivement, du mécanisme à leviers à genouillère (32).

14. Dispositif de commande de positionnement actionné par un agent sous pression suivant la revendication 13, caractérisé en ce que la butée (32) est réglable.

15. Dispositif de commande de positionnement actionné par un agent sous pression suivant l'une des revendications 5 à 11, caractérisé en ce qu'entre la manchette (3) et le piston (2) est disposée une butée (23) solidaire du corps.

16. Dispositif de commande de positionnement actionné par un agent sous pression suivant l'une des revendications 1 à 15, caractérisé en ce que le piston (2) est articulé à une paroi (13, respectivement 14) du corps cylindrique (1) ; en ce que, contre l'extrémité libre du piston (2), s'applique un paquet de ressorts (24), un ressort plat (36) ou un mécanisme à leviers à genouillère (32), et en ce que le piston (2) exécute un mouvement de pivotement lors de la sollicitation de la manchette (3) par l'agent sous pression.

FIG. 1    FIG. 2

FIG. 3

0 090 885

FIG. 4

FIG. 5

FIG. 6

FIG. 7

FIG. 8

FIG. 9

FIG. 10